# EUROPÄISCHE PATENTSCHRIFT

(11) **EP 1 053 120 B1**
(45) Veröffentlichungstag und Bekanntmachung des Hinweises auf die Patenterteilung: **12.06.2002**
(21) Anmeldenummer: 99910138.9
(22) Anmeldetag: 12.02.1999
(51) Int. Cl.: B60J 10/00

(54) **GUMMIELASTISCHE DICHTUNG, INSBESONDERE FÜR INNENSCHWENKTÜREN BEI FAHRZEUGEN**
RUBBER ELASTIC SEAL, ESPECIALLY FOR INTERNAL HINGED DOORS IN VEHICLES
GARNITURE D'ETANCHEITE CAOUTCHOUTEUSE, NOTAMMENT POUR PORTES DE VEHICULES, A PIVOTEMENT INTERIEUR

(30) Priorität: 12.02.1998 DE 29802364 U; 03.09.1998 DE 29815883 U
(43) Veröffentlichungstag der Anmeldung: 22.11.2000
(73) Patentinhaber: Gummi-Welz GmbH & Co. KG, 89077 Ulm (DE)
(72) Erfinder: SCHIFFERS, Herbert, D-89275 Elchingen (DE); FRITSCHE, Wolfgang, D-89134 Blaustein (DE)
(74) Vertreter: König, Beate, Dipl.-Phys. Dr.
(86) Internationale Anmeldenummer: DE9900406
(87) Internationale Veröffentlichungsnummer: WO9941098

(56) Entgegenhaltungen:
- EP-A- 0 003 468
- EP-A- 0 466 531
- DE-A- 19 722 818
- DE-C- 4 402 604
- DE-U- 9 406 445

## Beschreibung

Die Erfindung betrifft eine gummielastische Dichtung, insbesondere für Innenschwenktüren bei Fahrzeugen, umfassend eine Rückwand, eine Außenwand, eine Innenwand und eine Stirnwand, die eine von der Innenseite zur Außenseite hin von der Stirnseite aus zunehmend schräg vorstehend verlaufende Stirnleiste aufweist, sowie eine im Außenkantenbereich der Stirnleiste angeformte, sich von der Stirnseite fort erstreckende, bewegliche Dichtlippe.

Gummielastische Dichtungen für Türen von Nutzfahrzeugen, insbesondere für die Personenbeförderung, haben neben üblichen technischen Anforderungen Sicherheitskriterien zu erfüllen. So muß es beispielsweise gewährleistet sein, daß die Hand einer Person zwischen sich schließende Türen gelangt, ohne daß es zu einer Verletzung oder Personengefährdung kommt. Hieraus ergeben sich einerseits bestimmte notwendige Elastizitätseigenschaften wie Nachgiebigkeit der Dichtung in bestimmtem Umfang und andererseits das Erfordernis, daß die Türschließbewegung bei einem. bestimmten Widerstand reversiert werden muß, d.h. daß sich die Tür notfalls wieder öffnen muß, um die eingeklemmte Hand oder dergleichen freizugeben.

Zur Erfassung von Händen, Fremdgegenständen etc. zwischen den Dichtungen sind bei einem Typ der Dichtungsausführung Drucksensoren (beispielsweise in der DE 94 06 445.8 U1 offenbart) oder Schaltleisten an der Stirnkante der Dichtungen angeordnet worden, die eine Druckbeaufschlagung der Dichtleiste im Stirnkantenbereich in ein elektrisches Signal umwandeln bzw. als Widerstandsänderung erfassen. Dieses elektrische Signal löst dann bei Überschreiten eines bestimmten Schwellwerts ein Türöffnungssignal aus, woraufhin sich dann eine Tür wieder öffnet.

Da zur Abdichtung von Türdichtungen vorzugsweise eine sich in Richtung der Dichtungsstirnkante erstreckende Dichtlippe mit einer gewissen Steifigkeit vorgesehen wird, kann es leicht dazu kommen, daß infolge der Dichtlippen- bzw. relativen Türposition nach dem Schließen die eine Tür leicht, die andere aber nicht ohne Gewalt zu öffnen ist. Der Grund ist, daß die Dichtlippe der Tür, die sich öffnen soll, von der Dichtlippe der gegenüberliegenden Tür festgehalten wird.

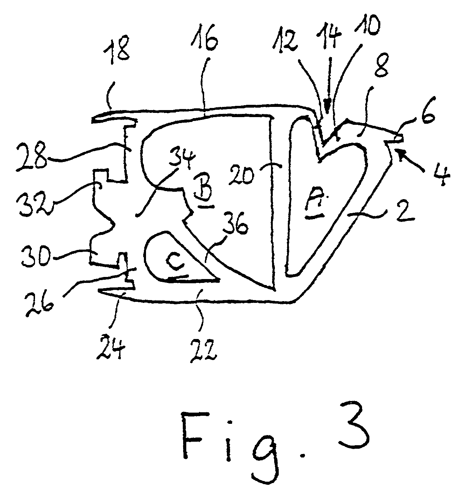

Zur Lösung dieses Problems wurde eine in Fig. 3 dargestellte Dichtung mit einer Rück-, Innen-, Außen- und Stirnwand entwickelt. Diese weist eine Stirnleiste 2 auf, die sich von der Dichtungsinnenwand zur Dichtungsaußenwand, schräg nach außen vorstehend erstreckt und seitlich an deren Außenkante eine verhältnismäßig schmale, bewegliche Dichtlippe 6 aufweist, die etwa in stirnseitiger Richtung, im Anschluß an eine Rille 4 vorsteht. Die Dichtlippe 6 überdeckt an der Außenseite der Dichtung einen kurzen Außensteg 8, mit dem sie einstückig verbunden ist und der mit dem türseitigen Ende der Dichtlippe 6 in einen schräg einwärts in das Innere der Dichtung hinein verlaufenden Dichtungsabschnitt 10 übergeht. Von diesem erstreckt sich wieder ein Dichtungsabschnitt 12 geringerer Wandstärke schräg nach außen derart, daß das Dichtungsprofil außen eine V-förmige Rille 14 aufweist. Damit ist eine scharnierartige Verbindung erzielt, wie noch später erläutert wird. An den Dichtungsabschnitt 12 schließt sich in Türrichtung ein verhältnismäßig gerader Außenabschnitt 16 an, der in eine sich in seiner Verlängerung erstreckende Außenlippe 18 übergeht, wobei sich im Übergangsbereich zwischen den beiden Dichtungsabschnitten 12, 16 ein Quersteg 20 von dem Dichtungs- und Außenabschnitt 12, 16 in etwa in einem rechten Winkel zum Außenabschnitt zur Innenkante der Stirnleiste 2 erstreckt, in den er übergeht. Damit ist eine Luftkammer A zwischen dem Quersteg 20, der Stirnleiste 2 und den Dichtungsabschnitten 10, 12 gebildet.

Weiter weist die bekannte Dichtung einen Innenabschnitt 22, der in eine Innenlippe 24 übergeht, und zwei Rückwandabschnitte 26, 28 auf. Zwischen den Rückwandabschnitten befindet sich ein Paar Montageleisten 30, 32 mit fußseitigem Aussteifungsbereich 34, von dem aus eine Verbindungsleiste 36 schräg nach hinten zur Innenkante der Stirnleiste 2 verläuft. Damit sind zwei weitere Luftkammern B und C gebildet.

Wird von der Stirnseite der Dichtung her, d.h. in Richtung der Stirnleiste 2, beispielsweise ein Druck durch eine eingeklemmte Hand ausgeübt, dann gibt die Dichtung aufgrund der Materialverdünnung und Elastizität im Bereich des Dichtungsabschnitts 12 scharnierartig nach. Der Bewegungshub entspricht etwa der Breite der V-förmigen Rille 14 im Außenbereich. Wird eine deutlich stärkere Kraft weiter ausgeübt, kann es zu ggf. zu einer Ausbauchung des Außenabschnitts 16 kommen. Hängt indessen die Dichtlippe 6 der Tür, die sich öffnen soll, unter der anderen fest, führt dies aufgrund der nur geringen Nachgiebigkeit der Dichtlippe 6 zu erhöhten Widerständen und Reibungsverlusten und es bedarf daher einer erheblichen Kraft, um die Tür dann im Bedarfsfall wirklich öffnen zu können. Ein Unfall- oder Störrisiko bleibt daher bestehen.

Wird zur leichteren Öffnung der Tür das Material im Bereich der Dichtlippe verringert, so daß eine Ausweichbewegung der Dichtlippe erfolgen kann, ergibt sich der Nachteil, daß die Dichtlippe nicht mehr dicht schließt. Alternativ muß die Lage der geschlossenen Türen völlig festgelegt sein, damit immer der Türöffnungsbefehl an die Tür mit der außen befindlichen Dichtlippe gehen kann. In der Praxis ist dies unerwünscht bzw. nur mit zu hohen Kosten realisierbar.

Der Erfindung liegt die Aufgabe zugrunde, eine Dichtung für Innenschwenktüren, insbesondere von Fahrzeugen von Nutzfahrzeugen zu schaffen, die ein beliebiges Öffnen eines von zwei Türflügeln bei hoher Betriebs- und Personensicherheit ermöglicht.

Diese Aufgabe ist erfindungsgemäß bei einer Dichtung mit den Merkmalen des Anspruchs 1 gelöst. Vorteilhafte Weiterbildungen der erfindungsgemäßen Dichtung sind Gegenstand der Unteransprüche.

Eine erfindungsgemäße gummielastische Dichtung, insbesondere für Innenschwenktüren bei Fahrzeugen, umfaßt somit eine Rückwand, insbesondere mit Montagebereich, eine Außenwand, eine Innenwand, eine Stirnwand, die eine von der Innenwand zur Außenwand hin von der Stirnwand aus zunehmend schräg vorstehend verlaufende Stirnleiste aufweist, sowie eine im Außenkantenbereich der Stirnleiste angeformte, sich von der Stirnwand fort erstreckende, bewegliche Dichtlippe. Diese Dichtlippe ist an einem Stegabschnitt der Außenwand und/oder Stirnwand in scharnierartiger Anlenkung angeformt.

Vorteilhaft bei der scharnierartigen Anlenkung der Dichtlippe ist, daß diese außerordentlich beweglich, und zwar schwenkbeweglich, ist und demzufolge leicht seitlich ausweicht, wenn ein Druck auf sie ausgeübt wird. Auf diese Weise kann die jeweils gewünschte Tür bedarfsweise geöffnet werden, auch wenn deren Dichtlippe unter der anderen liegt. Im Fall einer Bewegung dieser Tür nach außen ergibt sich dann, daß ihre unterhalb der anderen Dichtlippe befindliche Dichtlippe nach innen verschwenkt wird, wobei die darauf liegende andere Dichtlippe dann nach außen ausweicht, bis die beiden Dichtlippen voneinander frei kommen. Es ist somit bei Einsatz einer erfindungsgemäßen Dichtung gleich, ob der betreffende Türflügel mit der Dichtlippe oberhalb oder unterhalb der jeweils anderen Dichtlippe beim Schließvorgang in die Schließstellung gelangt.

Vorzugsweise ist die Dichtlippe an der Außenkante des Stegabschnitts angeformt. Es ergibt sich hierdurch praktisch eine asymmetrische Anlenkung der Dichtlippe, wobei eine maximale Beweglichkeit der Dichtlippe sichergestellt ist.

Die Dichtlippe kann flügelartig ausgebildet sein und/oder außerhalb des Anformbereichs zumindest bereichsweise eine größere Wandstärke aufweisen. Dadurch ist einerseits ihre Verschwenkbarkeit und Flexibilität erhöht. Infolge der vergrößerten Wandstärke ist andererseits zugleich eine ausreichende Steifigkeit der Dichtlippe gewährleistet, die auch für eine sichere Abdichtung sorgt. Als Kompensation kann die Dichtlippe wiederum nach außen eine geringere Wandstärke aufweisen, so daß sie sich leicht umbiegen läßt.

Vorzugsweise weist die Dichtlippe auf der Innenseite Rippen auf, die ein Klebenbleiben der Dichtlippen aneinander verhindern. Hierdurch kann auf die aufwendige Aufbringung von Gleitlacken, Kunststoffbeschichtungen oder dergleichen verzichtet werden.

Bei einem vorteilhaften Ausführungsbeispiel der Erfindung ist der Stegabschnitt an der Außenkante der Stirnleiste unter Bildung eines Spalts zur Außenwand angeformt. Hierdurch ist ein Anschlag des Stegabschnitts an der Außenwand gebildet, an dem der Stegabschnitt im Falle einer Auslenkung der Dichtlippe nach außen gelangt. Der sich ergebende Auslenkungsbereich ist bestimmt durch die Abmessungen des Stegabschnitts (Länge, Wandstärke) und den Abstand zur Außenwand. Weiter ist die Folge dieser Anordnung eine leichte Auslenkung der Dichtlippe nach innen. Der Verschwenkbereich nach innen ist ebenfalls durch die Dichtungsgeometrie bestimmt. Er ist durch die Schrägstellung der Stirnleiste deutlich vergrößert. Ein Vorteil einer vorzugsweisen Auslenkung der Dichtlippe nach innen besteht darin, daß der beim Fahren entstehende Unterdruck eine Schließbewegung der Dichtlippe, d.h. Einwärtsklappen, herbeiführt.

Ein weiterer Vorteil, der sich aus der erfindungsgemäßen Dichtlippenanordnung ergibt, besteht darin, daß die sehr flexible Dichtlippe bei ausreichend ebenem Verlauf und Breitendimensionierung einen Toleranzenausgleich für Fertigungstoleranzen der Türflügel ermöglicht. Mit entsprechender Ausbildung mit Rippen auf der Innenseite ist die Überbrückung eines größeren Toleranzbereiches und infolge der sich durch die Scharnierwirkung ergebenden zusätzlichen Elastizität eine leichtere Abdichtung bei Toleranzen über die Breite der Doppelflügeltür gegeben.

Als zweckmäßig hat es sich erwiesen, daß die Wandstärke der Stirnleiste so bemessen ist, daß diese bei Einleitung einer Kraft im Stirnleistenaußen- und auch im Stirnleisteninnenbereich elastisch in etwa in Richtung der Rückwand ausgelenkt wird. Hierbei kann die Länge der Stirnseite geringfügig länger als die direkte Verbindung zwischen den beiden Kanten der Stirnleiste sein, wodurch sich schon eine Sollauslenkungsrichtung bei Kraftbeaufschlagung ergibt. Auf diese Weise ist ein mechanisches Nachgeben der Dichtung ermöglicht, wenn jemand oder ein Gegenstand zwischen den sich schließenden Türen eingeklemmt wird. Alternativ kann auch die Wandstärke der Stirnleiste geringer als bei den benachbarten Wandabschnitten sein, wodurch sich ebenfalls eine bevorzugte Auslenkung der Stirnleiste in bezug auf die anderen Wandabschnitte ergibt.

Weist die Dichtung einen sich zwischen der Außen- und der Innenwand erstreckenden Quersteg auf, dann kann die Wandstärke des Querstegs vorteilhaft so bemessen sein, daß dieser bei Einleitung einer Kraft im Stirnleistenaußen- und auch Stirnleisteninnenbereich elastisch in etwa in Richtung der Rückwand ausgelenkt wird. Auf diese Weise kann sich die Dichtung im Fall eines Fremdkörpers zwischen zwei Türen fast völlig zusammenlegen, wodurch allein schon der Fremdkörper in vielen Fällen freigegeben wird, ohne daß sich die Tür eigentlich noch öffnen müßte.

Eine vorteilhafte Ableitung des Fahrtwindes mit Geräusch- und auch Zugverringerung ergibt sich, wenn das stirnseitige Ende der Außenwand in einer nach außen weisenden Nase endet.

Die erfindungsgemäße gummielastische Dichtung ist vorzugsweise aus Elastomeren, insbesondere auch thermoplastischen Elascomeren, hergestellt.

Die Erfindung wird im folgenden weiter anhand eines bevorzugten Ausführungsbeispiels und der Zeichnung weiter erläutert, wobei diese Erläuterung, ebenso wie auch die Merkmalszusammenfassung in den Unteransprüchen, die Erfindung nicht auf diese Ausgestaltungen einschränken soll. Es zeigen:
- Fig. 1: eine schematische Draufsicht auf ein Profilpaar einer erfindungsgemäßen Dichtung für eine Doppelflügeltür,
- Fig. 2: eine Ansicht ähnlich Fig. 1, wobei die Profile bis zur Anlage der Dichtlippen aneinander angenähert dargestellt sind, und
- Fig. 3: eine schematische Draufsicht auf ein Profil einer bekannten Dichtung.

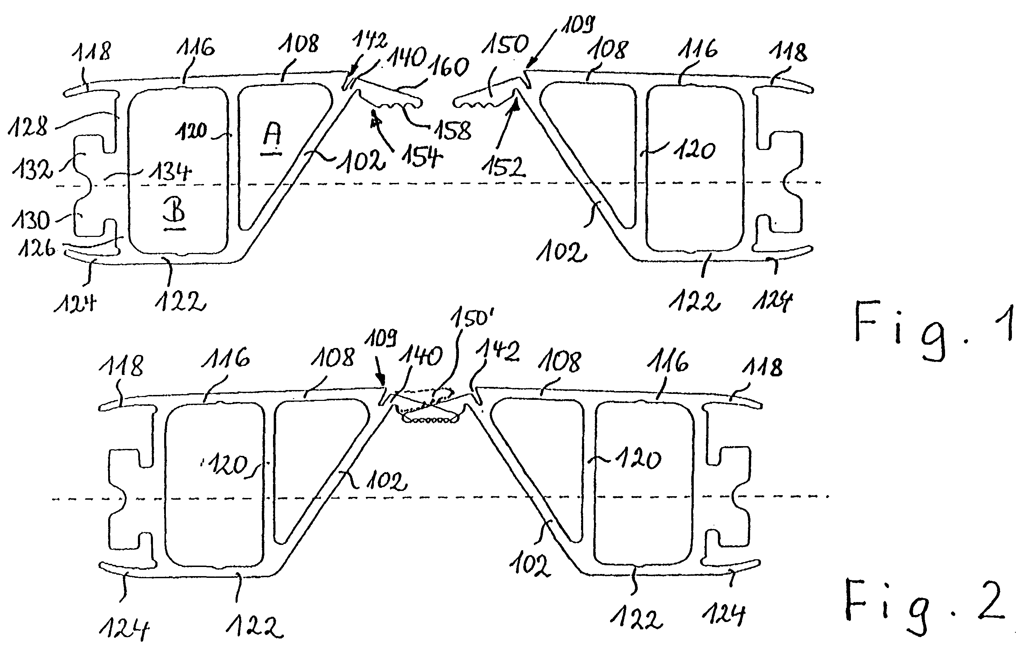

Eine erfindungsgemäße Dichtung, wie sie in Fig. 1 und 2 dargestellt ist, umfaßt eine Rück-, Innen-, Außen- und Stirnwand. Die Stirnwand weist eine Stirnleiste 102 auf, die sich von der Dichtungsinnenwand zur Dichtungsaußenwand, schräg nach außen vorstehend erstreckt. An die Stirnleiste 102 schließt sich auf der Außenseite ein kurzer Außensteg 108 an, mit dem sie einstückig verbunden ist. An den Außensteg 108 schließt sich in Türrichtung ein verhältnismäßig gerader Außenabschnitt 116 an, der in eine sich in seiner Verlängerung erstreckende Außenlippe 118 übergeht. Im Übergangsbereich zwischen dem Außensteg 108 und dem Außenabschnitt 116 erstreckt sich ein Quersteg 120 in etwa in einem rechten Winkel zur Innenkante der Stirnleiste 102 hin, in den er übergeht. Damit ist eine Luftkammer A zwischen dem Quersteg 120, der Stirnleiste 102 und dem Außensteg 108 gebildet.

An der Außenkante der Stirnleiste 102 ist ein Stegabschnitt 140 angeformt. Zur benachbarten Außenwand bzw. deren Stegabschnitt 108 hin ist ein Spalt 142 gebildet. Der Stegabschnitt 108 endet in einer nach außen weisenden Nase 109, die als Wind- und Regenwasserabweiser dient.

An dem Stegabschnitt 140 ist eine flügelartig ausgebildete Dichtlippe 150 angeformt derart, daß sich eine scharnierartige Auslenkbarkeit der Dichtlippe in bezug auf den Stegabschnitt 140 ergibt. Benachbart dem Stegabschnitt 140 befindet sich ein Bereich 152 der Dichtlippe mit geringer Lippenbreite, der den Scharnierbereich darstellt. Daran schließt sich ein Bereich 154 mit größerer Wandstärke und an diesen wiederum ein Bereich 156 mit abnehmender Wandstärke an. Im Bereich 154 weist die Dichtlippe auf der Innenseite Rippen 158 auf. Die Außenseite 160 der Dichtlippe 150 ist gerade ausgebildet.

Weiter weist die erfindungsgemäße Dichtung einen Innenabschnitt 122, der in eine Innenlippe 124 übergeht, und zwei Rückwandabschnitte 126, 128 auf. Zwischen den Rückwandabschnitten befindet sich ein Paar Montageleisten 130, 132 mit fußseitigem Aussteifungsbereich 134. Damit ist eine weitere Luftkammer B gebildet.

Fig. 2 veranschaulicht die Anordnung der beiden Dichtlippen 150, wenn die Türen geschlossen sind. Allerdings sind hier die Dichtlippen in Überschneidung dargestellt, während im Einsatzfall beispielsweise die in Fig. 2 linke Dichtlippe eine Position einnimmt, wie sie bei 150' in Phantomdarstellung angedeutet ist. D.h. sie ist leicht nach außen ausgelenkt und liegt auf der rechten Dichtlippe 150 auf, die dann ebenfalls etwas einwärts ausgelenkt wäre, was aber in Fig. 2 nicht dargestellt ist.

Wird im Einsatzfall von der Stirnseite der Dichtung her, d.h. in Richtung der Stirnleiste 102, beispielsweise ein Druck durch eine eingeklemmte Hand ausgeübt, dann gibt die Dichtung aufgrund der Materialverdünnung und Elastizität im Bereich 152 der Dichtlippe scharnierartig nach innen oder nach außen nach. Wird eine deutlich stärkere Kraft weiter ausgeübt, kann es zu einer Einbauchung der Stirnleiste 102 und dann weiter zu einer Rückwärtsbiegung des Querstegs 120 kommen. In diesem Fall ist die Dichtung dann aufgrund ihrer Elastizität auf beispielsweise etwa 40 % ihrer Normalabmessungen zusammengedrückt.

Soll eine bestimmte Tür geöffnet werden und befindet sich die Dichtlippe 150 dieser Tür unter der anderen, führt dies aufgrund der großen Nachgiebigkeit der Dichtlippen 150 zu keinerlei Problemen. Die Dichtlippe 150 der Tür, die sich öffnen soll, schiebt dann beim Öffnungsvorgang mit eigener Abbiegung nach innen die andere Dichtlippe 150 nach außen und nimmt nach dem Freikommen von dem Eingriff mit ihr wieder die Ausgangslage ein. Für diese Bewegungsabläufe wird nur wenig Kraft aufgrund der hohen Elastizität der Dichtung benötigt.

## Patentansprüche

1. Gummielastische Dichtung, insbesondere für Innenschwenktüren bei Fahrzeugen, umfassend eine Rückwand, eine Außenwand, eine Innenwand sowie eine Stirnwand, die eine von der Innenseite zur Außenseite hin von der Stirnseite aus zunehmend schräg vorstehend verlaufende Stirnleiste (102) aufweist, sowie eine im Außenkantenbereich der Stirnleiste angeformte, sich von der Stirnseite fort erstreckende, bewegliche Dichtlippe (150), **dadurch gekennzeichnet, daß** die Dichtlippe (150) an einem Stegabschnitt (140) der Außenwand und/oder Stirnwand in scharnierartiger Anlenkung angeformt ist.

2. Dichtung nach Anspruch 1, **dadurch gekennzeichnet, daß** die Dichtlippe (150) an der Außenkante des Stegabschnitts (140) angeformt ist.

3. Dichtung nach Anspruch 1 oder 2, **dadurch gekennzeichnet, daß** die Dichtlippe (150) flügelartig ausgebildet ist und/oder außerhalb des Anformbereichs zumindest bereichsweise eine größere Wandstärke aufweist.

4. Dichtung nach Anspruch 3, **dadurch gekennzeichnet, daß** die Dichtlippe (150) zu ihrer Stirnseite hin eine geringere Wandstärke aufweist.

5. Dichtung nach einem der Ansprüche 1 bis 4, **dadurch gekennzeichnet, daß** die Dichtlippe (150) auf der Innenseite Rippen (158) aufweist.

6. Dichtung nach einem der Ansprüche 1 bis 5, **dadurch gekennzeichnet, daß** der Stegabschnitt (140) an der Außenkante der Stirnleiste unter Bildung eines Spalts (142) zur Außenwand angeformt ist.

7. Dichtung nach einem der Ansprüche 1 bis 6, **dadurch gekennzeichnet, daß** die Stirnleiste (102) so bemessen ist, daß diese bei Einleitung einer Kraft im Stirnleistenkantenbereich elastisch in etwa in Richtung der Rückwand ausgelenkt wird.

8. Dichtung nach Anspruch 7, mit einem sich zwischen der Außen- und der Innenwand erstreckenden Quersteg (120), **dadurch gekennzeichnet, daß** die Wandstärke des Querstegs (120) so bemessen ist, daß dieser bei Einleitung einer Kraft im Stirnleistenkantenbereich elastisch in etwa in Richtung der Rückwand ausgelenkt wird.

9. Dichtung nach einem der Ansprüche 1 bis 8, **dadurch gekennzeichnet, daß** das stirnseitige Ende der Außenwand in einer nach außen weisenden Nase (109) endet.

10. Dichtung nach einem der Ansprüche 1 bis 9, **dadurch gekennzeichnet, daß** die Dichtung aus Elastomer hergestellt ist.

## Claims

1. Rubber elastic seal, especially for internally hinged doors in vehicles, comprising a rear wall, an outer wall, an inner wall as well as an end wall, providing a leading edge (102) from the inside to the outside and protruding from the end wall at an increasing angle; furthermore a flexible sealing lip (150) moulded onto and extending from the outer area of the leading edge, **characterised in that** the sealing lip (150) is moulded on a web section (140) of the outer wall and/or the end wall in a hinged manner.

2. Seal according to claim 1, **characterised in that** the sealing lip (150) is moulded onto the external edge of the web section (140).

3. Seal according to claims 1 or 2, **characterised in that** the sealing lip (150) provides a winged shape and/or provides, at least partially, a greater wall thickness outside the moulding area.

4. Seal according to claim 3, **characterised in that** the sealing lip (150) provides a reduced wall thickness towards its end wall.

5. Seal according to one of the claims 1 to 4, **characterised in that** the sealing lip (150) provides ribs (158) on the inside.

6. Seal according to one of the claims 1 to 5, **characterised in that** the web section (140) is moulded to the external edge of the leading edge creating a gap (142) towards the outer wall.

7. Seal according to one of the claims 1 to 5, **characterised in that** the leading edge (102) is dimensioned so, that when a force is applied to the area of the leading edge, the leading edge is flexibly deflected approximately towards the rear wall.

8. Seal according to claim 7, providing a cross web (120) between the inner and outer wall, **characterised in that** the wall thickness of the cross web (120) is dimensioned so, that when a force is applied to the area of the leading edge, the web will flexibly deflect approximately towards the rear wall.

9. Seal according to one of the claims 1 to 8, **characterised in that** the leading edge side of the outer wall ends in an outwardly protruding tab (109).

10. Seal according to one of the claims 1 to 9, **characterised in that** the seal is made from an elastomeric material.

## Revendications

1. Garniture d'étanchéité élastique, en particulier pour des portes de véhicules du type à ouverture par pivotement vers l'intérieur, comprenant une paroi arrière, une paroi extérieure, une paroi intérieure ainsi qu'une paroi frontale présentant une entretoise frontale (102) s'étendant de façon oblique depuis le côté intérieur vers le côté extérieur en dépassant de plus en plus le côté frontal, ainsi qu'une lèvre d'étanchéité (150) mobile se raccordant à l'entretoise frontale dans la zone du bord extérieur de cette dernière de manière à s'éloigner du côté frontal, **caractérisée par le fait que** la lèvre d'étanchéité (150) se raccorde à une portion d'aile (140) de la paroi extérieure et/ou de la paroi frontale en y étant articulée à la manière d'une charnière.

2. Garniture d'étanchéité suivant la revendication 1, **caractérisée par le fait que** la lèvre d'étanchéité (150) se raccorde à l'endroit du bord extérieur de l'entretoise frontale (140).

3. Garniture d'étanchéité suivant la revendication 1 ou 2, **caractérisée par le fait que** la lèvre d'étanchéité (150) est réalisée à la manière d'une aile et/ou présente en dehors de la zone de raccordement au moins par partie une épaisseur de paroi accrue.

4. Garniture d'étanchéité suivant la revendication 3, **caractérisée par le fait que** la lèvre d'étanchéité (150) présente vers son côté frontal une épaisseur de paroi réduite.

5. Garniture d'étanchéité suivant l'une des revendications 1 à 4, **caractérisée par le fait que** la lèvre d'étanchéité (150) présente des nervures sur le côté intérieur.

6. Garniture d'étanchéité suivant l'une des revendications 1 à 5, **caractérisée par le fait que** la portion d'aile (140) se raccorde au bord extérieur de l'entretoise frontale en formant une fente (142) par rapport à la paroi extérieure.

7. Garniture d'étanchéité suivant l'une des revendications 1 à 6, **caractérisée par le fait que** l'entretoise frontale (102) est dimensionnée de manière que cette dernière se trouve déviée élastiquement à peu près en direction de la paroi arrière lors de l'application d'une force dans la zone du bord de l'entretoise frontale.

8. Garniture d'étanchéité suivant la revendication 7, comprenant une entretoise transversale (120) s'étendant entre la paroi extérieure et la paroi intérieure, **caractérisée par le fait que** l'épaisseur de paroi de l'entretoise transversale (120) est dimensionnée de manière que cette dernière se trouve déviée élastiquement à peu près en direction de la paroi arrière lors de l'application d'une force dans la zone du bord de l'entretoise frontale.

9. Garniture d'étanchéité suivant l'une des revendications 1 à 8, **caractérisée par le fait que** la paroi extérieure se termine côté frontal sous la forme d'un nez (109) orienté vers l'extérieur.

10. Garniture d'étanchéité suivant l'une des revendications 1 à 9, **caractérisée par le fait que** la garniture d'étanchéité est fabriquée en élastomère.
